# EUROPEAN PATENT SPECIFICATION

(11) **EP 1 116 757 B1**
(45) Date of publication and mention of the grant of the patent: **19.11.2003**
(21) Application number: 01100577.4
(22) Date of filing: 10.01.2001
(51) Int. Cl.: C09D 17/00, C09D 11/00

(54) **Pigment dispersion and inkjet ink composition using the pigment dispersion**
Pigmentdispersion und Tintenstrahltintenzusammensetzung unter Verwendung derselben
Dispersion pigmentaire et composition d'encre pour impression par jet l'utilisant

(30) Priority: 11.01.2000 JP 2000002068
(43) Date of publication of application: 18.07.2001
(73) Proprietor: Ricoh Company, Ltd., Tokyo 143-8555 (JP)
(72) Inventor: Taniguchi, Keishi, c/o Ricoh Company Ltd., Tokyo 143-8555 (JP); Hatada, Shigeo, c/o Ricoh Company Ltd., Tokyo 143-8555 (JP)
(74) Representative: Barz, Peter, Dr.

(56) References cited:
- EP-A- 0 256 456
- EP-A- 0 376 284
- EP-A- 0 704 504
- EP-A- 0 799 870
- US-A- 4 597 794

## Description

The present invention relates to a pigment dispersion, and an ink composition useful for ink jet printing using the pigment dispersion.

As having been disclosed in JP-A-63-51485, 63-56575 and 1-198671, inkjet inks in which one or more water-soluble dyes are dissolved in water or a mixture solvent of water and a water-soluble solvent optionally together with additives have been developed and used. However, these inkj et inks (hereinafter referred to as dye type inkjet inks) have the following drawbacks:
(1) recorded images have poor water resistance so that when recorded images contact water, the images blur; and
(2) recorded images have poor light resistance so that when recorded images are exposed to light, the color tones of images change or the image density thereof decreases.

In attempting to solve these problems of the dye type inkjet inks, pigment type inkjet inks have been disclosed in JP-A-57-10660,57-10661, 2-255875 and 2-276876, in JP-B 1-15542 and in EP-A-799870, 704504 and 256456.

When pigment type inkjet inks are used, the resultant recorded images, which have dried on a receiving material, have good water resistance so that when the images contact water, the images do not blur. This is because pigments are not soluble in water. In addition, since pigments have less reactivity with light than dyes, the images recorded by pigment type inks have better light resistance than those recorded by dye type inks.

Such pigment type inkjet inks are typically prepared by the following method:
(1) one or more pigments are dispersed in a dispersion medium together with a dispersant using a dispersing machine such as ball mills and sand mills; and
(2) the thus prepared pigment dispersion is optionally mixed with one or more additives to prepare a pigment type inkjet ink.

When the pigment dispersion includes pigment particles having a relatively large particle diameter, the large pigment particles in the resultant inkjet ink lodge in a inkjet nozzle, resulting in stopping of ink projection from the nozzle (hereinafter an ink stopping problem), and thereby image qualities of the recorded images, such as resolution and color reproducibility deteriorate. Therefore, the pigment dispersion is typically prepared such that the particle diameter of the pigment particles dispersed therein is not greater than 200 nm, and preferably not greater than 150 nm.

In addition, since the images recorded by the thus prepared inkjet ink have good transparency, the recorded images have excellent color reproducibility.

In order to manufacture a pigment type ink jet ink at a relatively low cost, it is needed to quickly prepare a pigment dispersion including such small pigment particles.

In addition, pigment type inkjet inks have to maintain such a dispersion state to avoid the ink stop problem mentioned above even when used or preserved under various environments such as relatively high or low temperature environments.

However, there is no dispersant nor a combination of a dispersant and an additive, which can quickly disperse a pigment in a dispersion medium such that the pigment achieves and maintains such a small particle diameter.

Because of these reasons, a need exists for a pigment dispersion which can be quickly prepared and by which a pigment type inkjet ink capable of producing good images without causing the ink stopping problem even when used and/or preserved under various environments can be prepared.

Accordingly, an object of the present invention is to provide a pigment dispersion for use in an inkjet ink, which can be effectively prepared at a relatively short time and by which a pigment type inkjet ink capable of maintaining a good dispersion state can be prepared.

Another object of the present invention is to provide a pigment type inkjet ink which can produce images having good image qualities such as good sharpness and color reproducibility even when used and preserved under various environments.

To achieve such objects, the present invention contemplates the provision of a pigment dispersion including at least a pigment (i.e., one or more pigments, hereinafter sometimes referred to as "pigment content"), a dispersant and a dispersion medium including water, wherein the dispersant has the following formula (I): 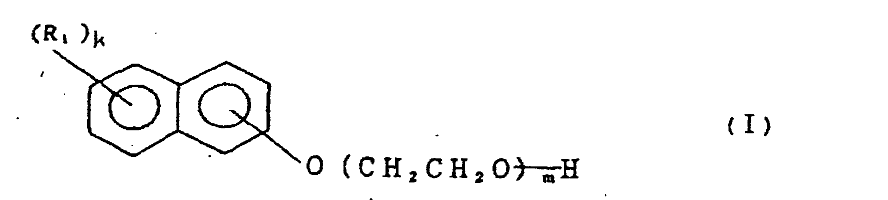 wherein R1 represents an alkyl group having from 1 to 20 carbon atoms, an aryl group or an aralkyl group; and k is 0 or an integer of from 1 to 7 and m is an integer of from 30 to 60.

It is preferable that the pigment dispersion further includes one or more of compounds having the following formula (II), (III) or (IV):

R2-(OA)n-OH (II)

wherein R2 represents an alkyl group having from 8 to 14 carbon atoms; OA represents an oxyethylene unit or a combination of an oxyethylene and an oxypropylene unit; and n is an integer of from 3 to 16; 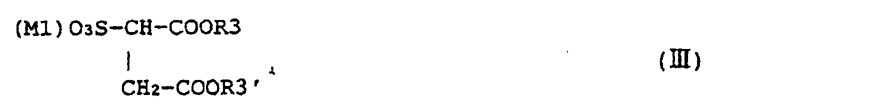 wherein M1 represents Na, K or Li; and R3 and R3' independently represent an alkyl group having from 1 to 20 carbon atoms;

R4O-(CH₂CH₂O)ₓ-CH₂COO(M2) (IV)

wherein M2 represents Na, K or Li; R4 represents an alkyl group having from 1 to 20 carbon atoms; and x is an integer of from 1 to 12.

In addition, it is preferable that the pigment includes Pigment Yellow 138, Pigment Red 122, Pigment Blue 15 or a carbon black as the pigment.

Further, it is preferable that the pigment particles dispersed in the pigment dispersion have a volume average particle diameter of from 20 nm to 200 nm.

In another aspect of the present invention, an inkjet ink including the pigment dispersion of the present invention and optionally an additive is provided.

It is preferable that the pigment particles dispersed in the inkjet ink have a volume average particle diameter of from 20 nm to 200 nm.

In addition, it is preferable that the content of the pigment in the inkjet ink is from 1 to 8 % by weight.

In yet another aspect of the present invention, an image forming method is provided which includes the steps of providing the inkjet ink of the present invention, and projecting the inkjet ink from a nozzle to form an ink image on an receiving material.

These and other objects, features and advantages of the present invention will become apparent upon consideration of the following description of the preferred embodiments of the present invention.

At first, the pigment dispersion of the present invention will be explained. The pigment dispersion includes at least a pigment, a dispersant and a dispersion medium including water, wherein the dispersant has the following formula (I): 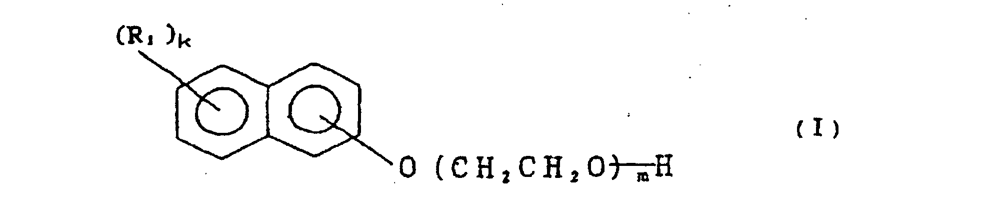 wherein R1 represents an alkyl group having from 1 to 20 carbon atoms, an aryl group or an aralkyl group; and k is 0 or an integer of from 1 to 7 and m is an integer of from 30 to 60.

Specific examples of the dispersant having formula (I) are as follows but are not limited thereto:

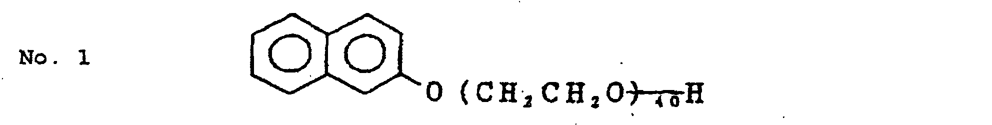

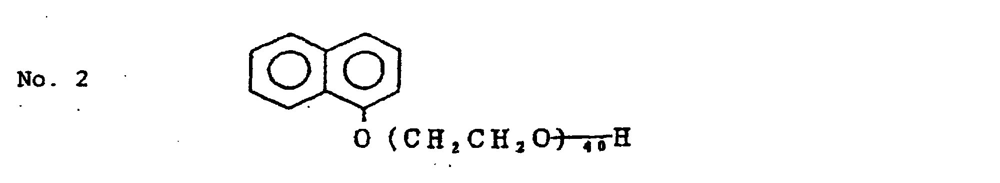

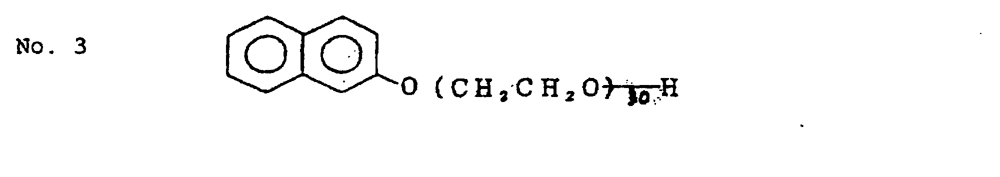

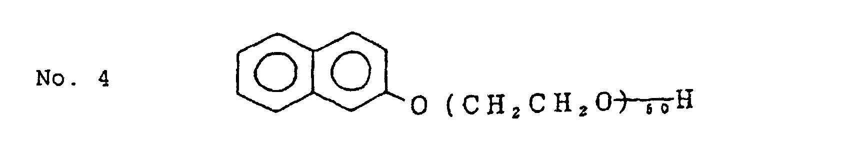

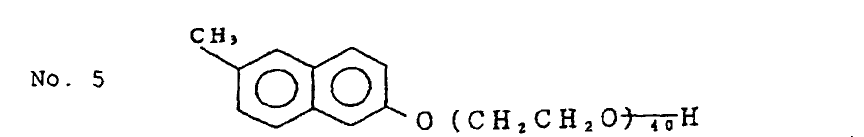

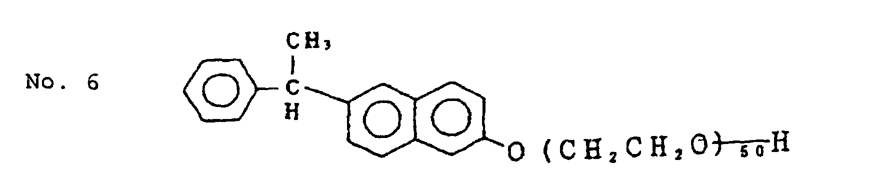

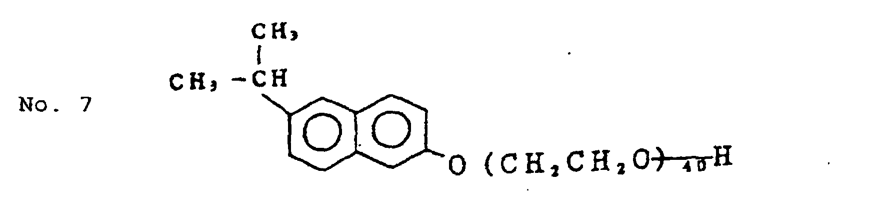

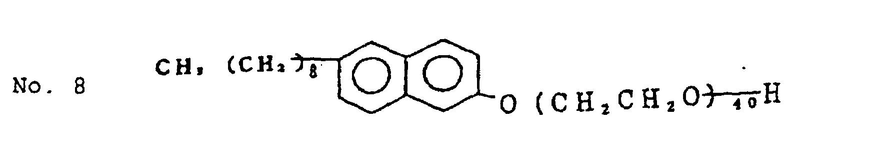

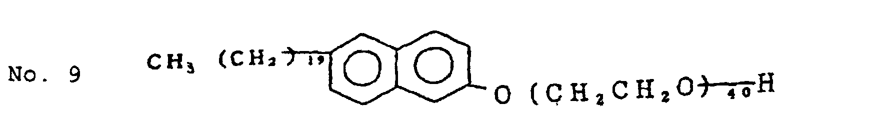

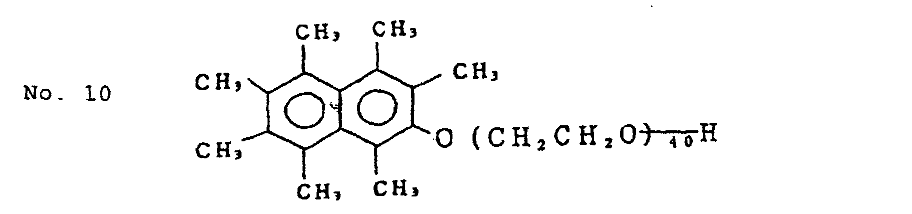

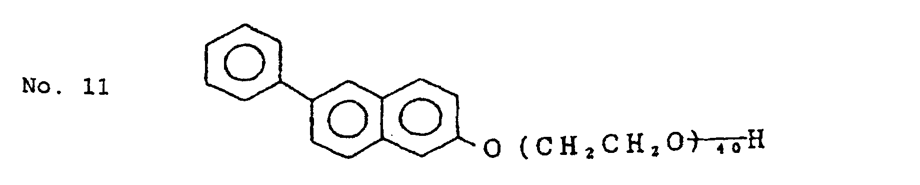

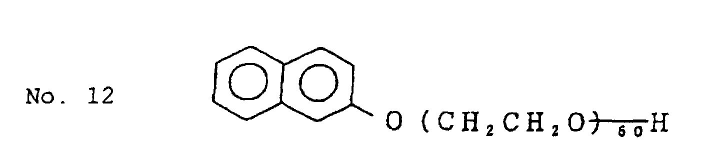

In formula (I), m is preferably from 30 to 60. When m is less than 30 or greater than 60, the resultant dispersants have poor dispersing ability.

The pigment dispersion of the present invention can include one or more dispersants.

Suitable pigments for use in the pigment dispersion of the present invention include known black and colored pigments.

Specific examples of such black pigments include carbon blacks such as furnace black, lamp black, acetylene black and channel black; powders including one or more metals such as copper powder, iron powder and titanium oxide powders; and organic pigments such as o-nitroaniline black and the like.

Specific examples of such colored pigments include toluidine red, Permanent Carmine FB, Fast Yellow AAA, Disazo Orange PMP, Lake Red C, Brilliant Carmine 6B, Phthalocyanine Blue, Quinacridone Red, Dioxane Violet, Victoria Pure Blue, Alkali Blue Toner, Fast Yellow 10G, Disazo Yellow AAMX, Disazo Yellow AAOT, Disazo Yellow AAOA, yellow iron oxide, Disazo Yellow HR, o-nitroaniline orange, dinitroaniline orange, Vulcan Orange, chlorinated Para Red, Brilliant Fast Scarlet, Naphthol Red 23, Pyrazolone red, Barium Red 2B, Calcium Red 2B, Strontium Red 2B, Manganese Red 2B, Barium Rithol Red, Pigment Scarlet 3B Lake, Lake Bordeaux 10B, Anthocyne 3B Lake, Anthocyne 5B Lake, Rhodamine 6G Lake, Eosin Lake, red iron oxide, Fanatol Red FGR, Rhodamine B Lake, Methyl Violet Lake, dioxane violet, Basic Blue 5B Lake, Basic Blue 6G Lake, Fast Sky Blue, Alkali Blue R Toner, Peacock Blue Lake, Prussian Blue, ultramarine blue, Reflex Blue 2G, Reflex Blue R, Brilliant Green Lake, Diamond Green, Thioflavine Lake, Phthalocyanine Green G, Green Gold, Phthalocyanine Green Y, iron oxide powders, red rust, zinc oxide, titanium oxide, calcium carbonate, clay, barium sulfate, alumina, alumina white, aluminum powders, bronze powders, fluorescent pigments, pearl pigments, Naphthol Carmine FB, Naphthol Red M, Permanent Carmine FB, Fast Yellow G, Disazo Yellow AAA, dioxane violet, Alkali Blue G Toner and the like. In addition, processed pigments which are prepared by grafting a resin on a pigment can also be used. These pigments can be used alone or in combination.

Among these pigments, carbon blacks, Pigment Yellow 138, Pigment Red 122 and Pigment Blue 15:3 are preferable as a black color pigment, a yellow color pigment, a magenta color pigment and a cyan color pigment, respectively, because of having good dispersion stability, color reproducibility, and light resistance. With respect to Pigment Red 122, pigments which are subjected to a surface treatment using one or more derivatives of Pigment Red 122 are preferably used because of having good dispersion property.

The pigment dispersion and inkjet ink using the pigment dispersion may include one or more organic solvents which are compatible with water (hereinafter referred to as water-soluble organic solvents). Specific examples of such water-soluble organic solvents include alcohols having from 1 to 4 carbon atoms such as methyl alcohol, ethyl alcohol, n-propyl alcohol, isopropyl alcohol, n-butyl alcohol, sec-butyl alcohol and tert-butyl alcohol: amides such as dimethylformamide and dimethylacetamide; ketones or ketone alcohols such as acetone and diacetone alcohol; ethers such as tetrahydrofuran and dioxane; polyalkylene glycols such as polyethylene glycol and polypropylene glycol; alkylene glycols having from 2 to 6 carbon atoms such as ethylene glycol, propylene glycol, butylene glycol, triethylene glycol, 1,2,6-hexanetriol, thiodiglycol, hexylene glycol and diethylene glycol; alkyl ethers of a polyhydric alcohol such as glycerin, ethylene glycol monomethyl ether, ethylene glycol monoethyl ether, triethylene glycol monomethyl ether and triethylene glycol monoethyl ether; and other solvents such as N-methyl-2-pyrrolidone, 2-pyrrolidone and 1,3-dimethyl-2-imidazolydinone.

Among these water-soluble solvents, polyhydric alcohols, such as diethylene glycol and low alkyl ethers of a polyhydric alcohol such as triethylene glycol monomethyl ether and triethylene glycol monoethyl ether are preferable.

The pigment dispersion of the present invention can be prepared, for example, by the following method:
(1) one or more pigments and one or more dispersants are added in water or a mixture solvent of water and one or more water-soluble organic solvents; and
(2) the mixture is dispersed using a known dispersing machine such as sand mills, pearl mills, Dyno mills, ball mills, roll mills, nanomizers, homogenizers and the like.

The inkjet ink composition of the present invention can be prepared, for example, by the following method:
(1) the above-prepared pigment dispersion, water (or a mixture of water and one or more water-soluble organic solvents), and one or more additives such as surfactants are mixed while agitating;
(2) the mixture is filtered or centrifuged to remove large particles in the mixture; and then
(3) bubbles of air and/or gases in the mixture are removed to prepare an inkjet ink composition.

In the present invention, one or more of compounds having a formula selected from the group consisting of the following formulae (II), (III) and (IV) may be added to the pigment dispersion or inkjet ink composition such that pigment particles are stably dispersed in a pigment dispersion or inkj et ink composition.

R2― (OA)n―OH (II)

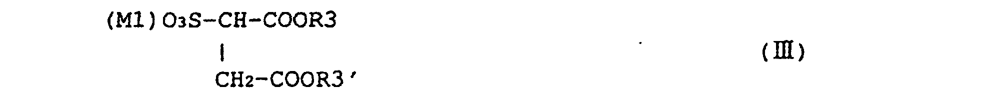

R4O― (CH₂CH₂O) ₓ―CH₂COO (M2) (IV)

These compounds may be added to a pigment dispersion when the dispersion is prepared, or added to an inkjet ink when the inkjet ink is prepared.

In formula (II), R2 is preferably selected from alkyl groups having from 8 to 14 carbon atoms. When R2 has carbon atoms not greater than 7 or not less than 15, the effect of the compound to stably disperse pigment particles in a dispersion medium is not satisfactory. In addition, n is preferably an integer of from 3 to 16. When n is out of this range, the effect of the compound to stably disperse pigment particles in a dispersion medium is not satisfactory.

In formula (III), R3 and R3' are independently selected from alkyl groups having from 1 to 20 carbon atoms. When R3 and R3' are a hydrogen atom or have carbon atoms not less than 21, the effect of the compound to stably disperse pigment particles in a dispersion medium is not satisfactory.

In formula (IV), R4 is preferably selected from alkyl groups having from 1 to 20 carbon atoms. When R4 is a hydrogen atom or has carbon atoms not less than 21, the effect of the compound to stably disperse pigment particles in a dispersion medium is not satisfactory. In addition, x is preferably an integer of from 1 to 12. When x is out of this range, the effect of the compound to stably disperse pigment particles in a dispersion medium is not satisfactory.

In the present invention, the ratio of the compound having formula (I) to the compound having formula (II) is preferably from 99.99/0.01 to 60/40 by weight to improve the dispersion stability of the pigment included in the resultant pigment dispersion and inkjet ink composition.

Similarly, it is also preferable that the ratio of the compound having formula (I) to the compound having formula (III) or the compound having formula (IV) is from 99.99/0.01 to 60/40 by weight to improve the dispersion stability of the pigment included in the resultant pigment dispersion and inkjet ink composition.

In the present invention, the ratio of the dispersant to the pigment included in the pigment dispersion and inkjet ink is preferably from 1/15 to 1/1 by weight. When the content of a dispersant (i. e. , a compound having formula (I)) is too low, the effect of the dispersant to stably disperse pigment particles in a dispersion medium is not satisfactory. On the contrary, when the content is too high, the resultant inkjet ink composition has too high viscosity and thereby it becomes hard to form images using a normal inkjet printer.

The pigment particles dispersed in the pigment dispersion and inkjet ink composition preferably have an average particle diameter of from 20 nm to 200 nm. When the average particle diameter is too large, the ink stopping problem tends to occur in nozzles of an inkjet printing heads, and in addition clear color images cannot be obtained. On the contrary, when the average particle diameter is too small, the preservability of the inkjet ink tends to deteriorate, and in addition, the light resistance of the resultant recorded images tends to deteriorate. Further, the manufacturing costs increase because it takes a long time to prepare a pigment dispersion in which such small pigment particles are dispersed. In the present invention, the average particle diameter of a pigment is measured by an instrument, Microtrack UPA manufactured by Nikkiso Co., Ltd.

The concentration of a pigment in the pigment dispersion of the present invention is preferably from 5 to 30 % by weight . When the concentration is too low, the productivity of the pigment dispersion is low. On the contrary, when the concentration is too high, it becomes hard to prepare the dispersion because the dispersion has too high viscosity.

The pigment dispersion may include one or more additives such as water-soluble solvents, surfactants and antiseptics.

Specific examples of such water-soluble solvents include alcoholssuch as methanol, ethanol, 1-propanol, and 2-propanol; polyhydric alcohols such as ethylene glycol, diethylene glycol, triethylene glycol, propylene glycol and glycerin; pyrrolidone derivatives such as N-methyl pyrrolidone and 2-pyrrolidone; ketones such as acetone and methyl ethyl ketone; alkanol amines such as monoethanol amine, diethanol amine, triethanol amine; and the like solvents.

As the surfactant, any known surfactants such as nonionic surfactants, anionic surfactants, cationic surfactants and amphoteric surfactants can be used.

The concentration of a pigment in the inkjet ink composition of the present invention is preferably from 1 to 8 % by weight. When the pigment concentration is too low, the resultant printed images has low image density, and therefore clear color images cannot be obtained. On the contrary, when the pigment concentration is too high, the viscosity of the resultant inkjet ink increases. In addition, the ink stopping problem tends to occur.

The additives mentioned above for use in the pigment dispersion can also be used for the inkjet ink. The content of the water-soluble solvent is preferably from 0 to 50 %.

The inkjet ink of the present invention can be used for continuously-jetting type inkjet printing methods and on-demand type inkj et printing methods. The on-demand type inkj et printing methods include piezoelectric inkjet printing methods, thermal inkjet printing methods and electrostatic inkjet printing methods.

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

### Example 1

### Preparation of pigment dispersion

The following components were contained in a beaker of 500 ml and agitated for 3 hours using a magnetic stirrer coated with Teflon to prepare a mixture (A).

| | |
|---|---|
| Pigment Red 122 (tradenamed as Toner Magenta EO2 manufactured by Clariant Japan K.K.) | 24 |
| Aqueous solution of polyoxyethylene β-naphthyl ether serving as dispersant and having formula No. 1 (solid content of this dispersant is 10 %, and polymerization degree of the polyoxyethylene is 40) | 120 |
| Deionized water | 16 |

Then the mixture was dispersed for 8 hours using a batch processing type desktop sand mill manufactured by Kanpe-Hapio Co., Ltd. and including zirconia balls having a particle diameter of 0.3 mm. The average particle diameter of the pigment in the thus prepared dispersion, which was measured by Microtrack UPA150 manufactured by Nikkiso Co. , Ltd., was 120.5 nm. Thus a pigment dispersion (A) was prepared.

### Preparation of inkjet ink

The following components were mixed.

| | |
|---|---|
| Pigment dispersion (A) | 40.0 |
| Glycerin | 7.5 |
| Diethylene glycol | 22.5 |
| 2-pyrrolidone | 3.0 |
| Compound having the following formula IV-1 C₁₃H₂₇O―(CH₂-CH₂O) ₃―CH₂―COONa ···IV-1 | 1.45 |
| Deionized water | 75.55 |

The mixture was agitated for 30 minutes. Then the mixture was filtered using a Membrane filter having holes of 0.8 µm in diameter, and settled in a vacuum to remove air bubbles therein.

Thus an inkjet ink (a) of the present invention was prepared.

The inkjet ink, which was contained in a closed plastic container, was preserved at 70 °C for 1 week. The average particle diameter of the pigment in the preserved inkjet ink, which was also measured by the method mentioned above, was 121.1 nm. The average particle diameter of the pigment hardly changed.

### Example 2

### Preparation of pigment dispersion

The procedure for preparation of the pigment mixture (A) was repeated except that the formulation was changed to the following.

| | |
|---|---|
| Pigment Red 122 (tradenamed as FASTOGEN SUPER MAGENTA RG manufactured by Dainippon Ink and Chemicals, Inc.) | 24 |
| Aqueous solution of polyoxyethylene β-naphthyl ether serving as dispersant and having formula No. 1 (solid content of this dispersant is 10 %, and polymerization degree of the polyoxyethylene is 40) | 120 |
| Heptaethylene glycol mono(5-decyl) ether having the following formula II-1 C₁₀H₂₁- (OCH₂CH₂) -OH ··· II-1 | 0.2 |
| Deionized water | 15.8 |

Thus, a pigment dispersion (B) was prepared. The average particle diameter of the pigment dispersed in the dispersion (B) was 118.7 nm.

### Preparation of inkjet ink

The procedure for preparation of the inkjet ink (a) was repeated except that the ink formulation was changed to the following.

| | |
|---|---|
| Pigment dispersion (B) | 40.0 |
| Glycerin | 7.5 |
| Diethylene glycol | 22.5 |
| 2-pyrrolidone | 3.0 |
| Deionized water | 77.0 |

Thus, an inkjet ink (b) of the present invention was prepared.

The average particle diameter of the pigment in the inkjet ink (b) after the preservation test was 119.1 nm. The average particle diameter of the pigment hardly changed.

### Example 3

### Preparation of pigment dispersion

The pigment mixture (A) was used as the pigment dispersion.

### Preparation of inkjet ink

The procedure for preparation of the inkjet ink (a) was repeated except that the ink formulation was changed to the following.

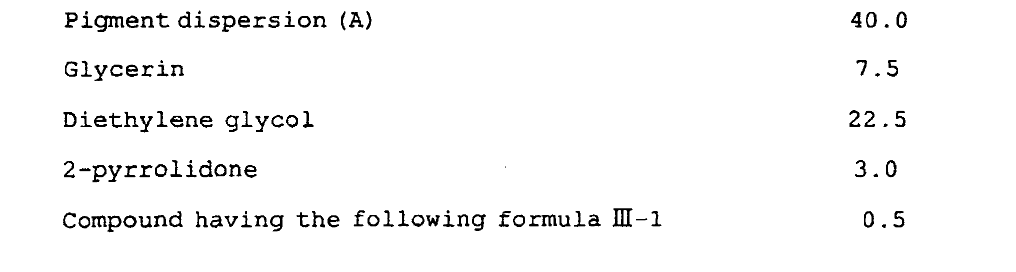

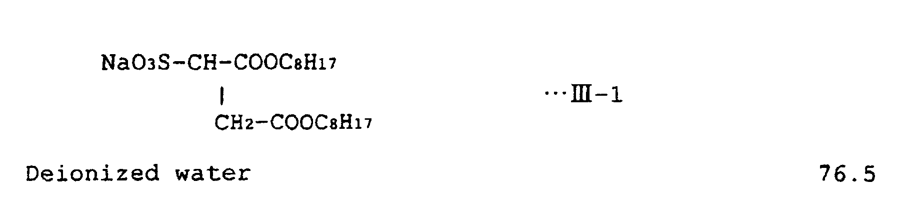

Thus, an inkjet ink (c) was prepared.

The average particle diameter of the pigment in the inkjet ink (c) after the preservation test was 120.7 nm. The average particle diameter of the pigment hardly changed.

### Example 4

### Preparation of pigment dispersion

The procedure for preparation of the pigment mixture (A) was repeated except that the formulation was changed to the following.

| | |
|---|---|
| Pigment Yellow 138 (tradenamed as LIONOGEN YELLOW-1010 manufactured by Toyo Ink Manufacturing Co., Ltd.) | 24 |
| Aqueous solution of polyoxyethylene α-naphthyl ether serving as dispersant and having formula No. 2 (solid content of this dispersant is 10 %, and polymerization degree of the polyoxyethylene is 40) | 120 |
| Deionized water | 16 |

Thus, a pigment dispersion (C) was prepared. The average particle diameter of the pigment dispersed in the dispersion (C) was 70.2 nm.

### Preparation of inkjet ink

The procedure for preparation of the inkjet ink (a) was repeated except that the ink formulation was changed to the following.

| | |
|---|---|
| Pigment dispersion (C) | 40.0 |
| Glycerin | 7.5 |
| Diethylene glycol | 22.5 |
| 2-pyrrolidone | 3.0 |
| Deionized water | 77.0 |

Thus, an inkjet ink (d) of the present invention was prepared.

The average particle diameter of the pigment in the inkj et ink (d) after the preservation test was 71.6 nm. The average particle diameter of the pigment hardly changed.

### Example 5

### Preparation of pigment dispersion

The pigment mixture (A) was used as the pigment dispersion.

### Preparation of inkjet ink

The procedure for preparation of the inkjet ink (a) was repeated except that the ink formulation was changed to the following.

| | |
|---|---|
| Pigment dispersion (A) | 40.0 |
| Glycerin | 7.5 |
| Diethylene glycol | 22.5 |
| 2-pyrrolidone | 3.0 |
| Deionized water | 77.0 |

Thus, an inkjet ink (e) was prepared.

The average particle diameter of the pigment in the inkjet ink (e) after the preservation test was 145.6 nm.

### Example 6

### Preparation of pigment dispersion

The procedure for preparation of the pigment mixture (A) was repeated except that the formulation was changed to the following.

| | |
|---|---|
| Pigment Blue 15:3 (tradenamed as LIONOL BLUE FG-7351 manufactured by Toyo Ink Manufacturing Co., Ltd.) | 24 |
| Aqueous solution of polyoxyethylene *β*-naphthyl ether Serving as dispersant and having formula No. 1 (solid content of this dispersant is 10 %, and polymerization degree of the polyoxyethylene is 40) | 120 |
| Deionized water | 16 |

Thus, a pigment dispersion (D) was prepared. The average particle diameter of the pigment dispersed in the dispersion (C) was 97.1 nm.

### Preparation of inkjet ink

The procedure for preparation of the inkjet ink (a) was repeated except that the formulation was changed to the following.

| | |
|---|---|
| Pigment dispersion (D) | 40.0 |
| Glycerin | 7.5 |
| Diethylene glycol | 22.5 |
| 2-pyrrolidone | 3.0 |
| Deionized water | 77.0 |

Thus, an inkjet ink (f) of the present invention was prepared.

The average particle diameter of the pigment in the inkjet ink (f) after the preservation test was 96.7 nm. The average particle diameter of the pigment hardly changed.

### Comparative Example 1

### Preparation of pigment dispersion

The procedure for preparation of the pigment mixture (A) was repeated except that the formulation was changed to the following.

| | |
|---|---|
| Pigment Red 122 (tradenamed as toner Magenta EO2 manufactured by Clariant Japan K.K.) | 24 |
| Aqueous solution of styrene-acrylic copolymer (tradenamed as Johncryl HPD71 manufactured by Johnson | 120 |
| Polymer, and solid content thereof is 10 %) Deionized water | 16 |

Thus, a pigment dispersion (E) was prepared. The average particle diameter of the pigment dispersed in the dispersion (E) was 210.8 nm.

The average particle diameter (210.8 nm) of the pigment in the pigment dispersion prepared in Comparative Example 1 is larger that the average particle diameter (120.5 nm) of the pigment in the pigment dispersion prepared in Example 1. In addition, the average particle diameter (210.8 nm) of the pigment in the pigment dispersion prepared in Comparative Example 1 is greater than 200 nm.

As described above, the pigment dispersion and inkjet ink including the pigment dispersion have the following advantages:
(1) the inkjet ink does not cause the ink stopping problem when used for an inkjet printer because the pigment dispersed therein has a relatively small average particle diameter; and
(2) the average particle diameter of the pigment in the inkjet ink hardly changes even when preserved at 70 °C for one week, and therefore the inkjet ink can be securely used without causing the ink stopping problem.

## Claims

1. A pigment dispersion comprising (a) a pigment content constituted of one or more pigments, (b) a dispersant, and (c) a dispersion medium comprising water, wherein the dispersant comprises a compound having the following formula (I): 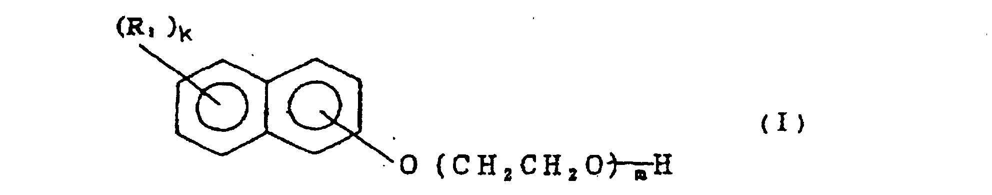 wherein R1 represents an alkyl group having from 1 to 20 carbon atoms, an aryl group, or an aralkyl group; and k is 0 or an integer of from 1 to 7 and m is an integer of from 30 to 60.

2. The pigment dispersion according to Claim 1, further including a compound having the following formula (II):
R2- ( OA) n-OH (II)
wherein R2 represents an alkyl group having from 8 to 14 carbon atoms; OA represents an oxyethylene unit or a combination of an oxyethylene unit and an oxypropylene unit; and n is an integer of from 3 to 16.

3. The pigment dispersion according to Claim 2, wherein a ratio of the compound having formula (I) to the compound having formula (II) is from 99.99/0.01 to 60/40 by weight.

4. The pigment dispersion according to any one of Claims 1 to 3, further including a compound having the following formula (III): 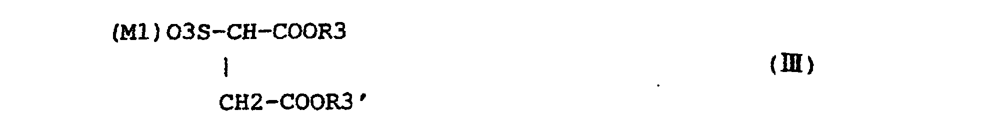 wherein M1 represents Na, K or Li; and R3 and R3' independently represent an alkyl group having from 1 to 20 carbon atoms.

5. The pigment dispersion according to Claim 4, wherein a ratio of the compound having formula (I) to the compound having formula (III) is from 99.99/0.01 to 60/40 by weight.

6. The pigment dispersion according to any one of Claims 1 to 5, further including a compound having the following formula (IV) :
R4O-(CH2CH2O)x-CH2COO(M2) (IV)
wherein R4 represents an alkyl group having from 1 to 20 carbon atoms; M2 represents Na, K or Li; and x is an integer of from 1 to 12.

7. The pigment dispersion according to Claim 6, wherein a ratio of the compound having formula (I) to the compound having formula (IV) is from 99.99/0.01 to 60/40 by weight.

8. The pigment dispersion according to any one of Claims 1 to 7, wherein the pigment content comprises Pigment Yellow 138, Pigment Red 122, Pigment Blue 15 and/or carbon black.

9. The pigment dispersion according to any one of Claims 1 to 8, wherein the ratio of the dispersant to the pigment is from 1/15 to 1/1 by weight.

10. The pigment dispersion according to any one of Claims 1 to 9, wherein the pigment content has a volume average particle diameter of from 20 nm to 200 nm.

11. The pigment dispersion according to any one of Claims 1 to 10, wherein the pigment content is included in the pigment dispersion in an amount of from 5% to 30% by weight.

12. An injet ink composition comprising a pigment dispersion according to any one of Claims 1 to 10 and, optionally, an additive.

13. The inkjet ink composition according to Claim 12, wherein the pigment content is included in the inkjet ink composition in an amount of from 1% to 8% by weight.

14. An image forming method comprising:
providing an inkjet ink composition according to Claim 12 or 13; and
projecting the inkjet ink composition from a nozzle to form an image on a receiving material.

## Patentansprüche

1. Pigmentdispersion umfassend (a) einen Pigmentanteil, der aus einem oder mehreren Pigmenten gebildet ist, (b) ein Dispergiermittel und (c) ein Dispersionsmedium umfassend Wasser, worin das Dispergiermittel eine Verbindung mit der folgenden Formel (I) umfasst: 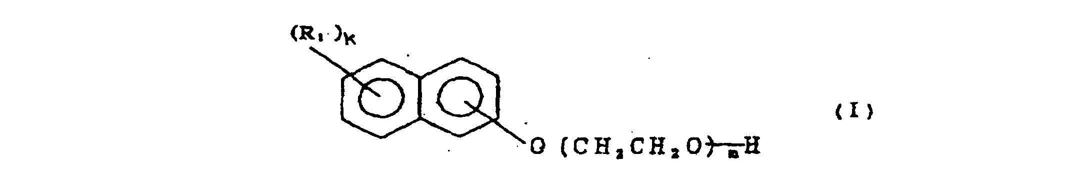 worin R₁ eine Alkylgruppe mit 1 bis 20 Kohlenstoffatomen, eine Arylgruppe oder eine Aralkylgruppe ist und k 0 oder eine ganze Zahl von 1 bis 7 ist und m eine ganze Zahl von 30 bis 60 ist.

2. Pigmentdispersion nach Anspruch 1, welche ferner eine Verbindung mit der folgenden Formel (II) beinhaltet:
R2-(OA)ₙ-OH (II)
worin R2 eine Alkylgruppe mit 8 bis 14 Kohlenstoffatomen darstellt, OA eine Oxyethyleneinheit oder eine Kombination von einer Oxyethyleneinheit und einer Oxypropyleneinheit darstellt und n eine ganze Zahl von 3 bis 16 ist.

3. Pigmentdispersion nach Anspruch 2, worin das Gewichtsverhältnis der Verbindung mit der Formel (I) zur Verbindung mit der Formel (II) 99,99/0,01 bis 60/40 beträgt.

4. Pigmentdispersion nach irgendeinem der Ansprüche 1 bis 3, welche ferner eine Verbindung mit der folgenden Formel (III) beinhaltet, 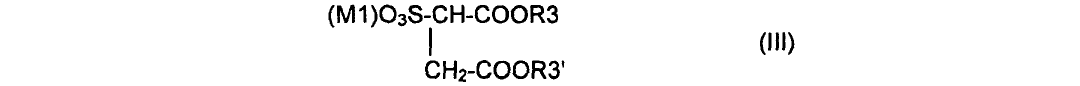 worin M1 Na, K oder Li darstellt und R3 und R3' unabhängig eine Alkylgruppe mit 1 bis 20 Kohlenstoffatomen sind.

5. Pigmentdispersion nach Anspruch 4, worin das Gewichtsverhältnis der Verbindung mit der Formel (I) zur Verbindung mit der Formel (III) 99,99/0,01 bis 60/40 beträgt.

6. Pigmentdispersion nach irgendeinem der Ansprüche 1 bis 5, welche ferner eine Verbindung mit der folgenden Formel (IV) beinhaltet:
R4O-(CH₂CH₂O)ₓ-CH₂COO(M2) (IV)
worin R4 eine Alkylgruppe mit 1 bis 20 Kohlenstoffatomen ist, M2 Na, K oder Li ist und x eine ganze Zahl von 1 bis 12 ist.

7. Pigmentdispersion nach Anspruch 6, worin das Gewichtsverhältnis der Verbindung mit der Formel (I) zur Verbindung mit der Formel (IV) 99,99/0,01 bis 60/40 beträgt.

8. Pigmentdispersion nach irgendeinem der Ansprüche 1 bis 7, worin der Pigmentanteil Pigment Yellow 138, Pigment Red 122, Pigment Blue 15 und/oder Ruß umfasst.

9. Pigmentdispersion nach irgendeinem der Ansprüche 1 bis 8, worin das Gewichtsverhältnis des Dispergiermittels zum Pigment 1/15 bis 1/1 beträgt.

10. Pigmentdispersion nach irgendeinem der Ansprüche 1 bis 9, worin der Pigmentanteil ein Volumenmittel des Teilchendurchmessers von 20 nm bis 200 nm aufweist.

11. Pigmentdispersion nach irgendeinem der Ansprüche 1 bis 10, worin der Pigmentanteil in der Pigmentdispersion in einer Menge von 5 bis 30 Gew.-% enthalten ist.

12. Tintenstrahl-Farbzusammensetzung umfassend eine Pigmentdispersion nach irgendeinem der Ansprüche 1 bis 10 und gegebenenfalls ein Additiv.

13. Tintenstrahl-Farbzusammensetzung nach Anspruch 12, worin der Pigmentanteil in der Tintenstrahl-Farbzusammensetzung in einer Menge von 1 bis 8 Gew.-% enthalten ist.

14. Bildaufzeichnungsverfahren umfassend:
Bereitstellen einer Tintenstrahl-Farbzusammensetzung nach Anspruch 12 oder 13 und
Schleudern der Tintenstrahl-Farbzusammensetzung von einer Düse auf ein Empfangsmaterial zur Aufzeichnung eines Bildes.

## Revendications

1. Dispersion pigmentaire comprenant
a) un contenu pigmentaire, constitué d'un ou de plusieurs pigments,
b) un agent dispersant,
c) et un milieu de dispersion comprenant de l'eau,
dans laquelle l'agent dispersant comprend un composé de formule (I) suivante : 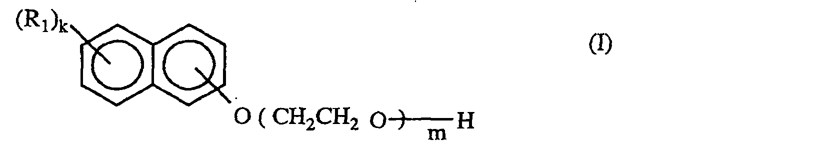 dans laquelle R₁ représente un groupe alkyle comportant de 1 à 20 atomes de carbone, un groupe aryle ou un groupe aralkyle, k vaut 0 ou représente un nombre entier valant de 1 à 7, et m représente un nombre entier valant de 30 à 60.

2. Dispersion pigmentaire conforme à la revendication 1, qui comprend en outre un composé de formule (II) suivante :
R2-(OA)ₙ―OH (II)
dans laquelle R2 représente un groupe alkyle comportant de 8 à 14 atomes de carbone, OA représente un motif oxyéthylène ou une combinaison de motifs oxyéthylène et oxypropylène, et n représente un nombre entier valant de 3 à 16.

3. Dispersion pigmentaire conforme à la revendication 2, dans laquelle le rapport pondéral du composé de formule (I) au composé de formule (II) vaut de 99,99/0,01 à 60/40.

4. Dispersion pigmentaire conforme à l'une des revendications 1 à 3, qui comprend en outre un composé de formule (III) suivante : 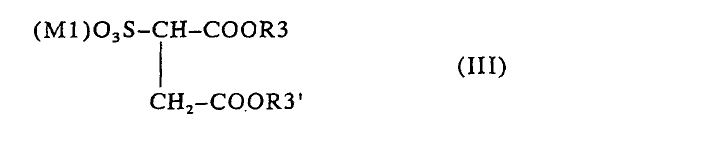 dans laquelle M1 représente Na, K ou Li, et R3 et R3' représentent chacun, indépendamment, un groupe alkyle comportant de 1 à 20 atomes de carbone.

5. Dispersion pigmentaire conforme à la revendication 4, dans laquelle le rapport pondéral du composé de formule (I) au composé de formule (III) vaut de 99,99/0,01 à 60/40.

6. Dispersion pigmentaire conforme à l'une des revendications 1 à 5, qui comprend en outre un composé de formule (IV) suivante :
R4O-(CH₂CH₂O)ₓ-CH₂COO(M2) (IV)
dans laquelle R4 représente un groupe alkyle comportant de 1 à 20 atomes de carbone, M2 représente Na, K ou Li, et x représente un nombre entier valant de 1 à 12.

7. Dispersion pigmentaire conforme à la revendication 6, dans laquelle le rapport pondéral du composé de formule (I) au composé de formule (IV) vaut de 99,99/0,01 à 60/40.

8. Dispersion pigmentaire conforme à l'une des revendications 1 à 7, dans laquelle le contenu pigmentaire comprend du Pigment Jaune 138, du Pigment Rouge 122, du Pigment Bleu 15 et/ou du noir de carbone.

9. Dispersion pigmentaire conforme à l'une des revendications 1 à 8, dans laquelle le rapport pondéral de l'agent dispersant au contenu pigmentaire vaut de 1/15 à 1/1.

10. Dispersion pigmentaire conforme à l'une des revendications 1 à 9, dans laquelle le diamètre moyen en volume des particules du contenu pigmentaire vaut de 20 à 200 nm.

11. Dispersion pigmentaire conforme à l'une des revendications 1 à 10, dans laquelle le contenu pigmentaire se trouve, dans la dispersion pigmentaire, en une proportion pondérale de 5 à 30 %.

12. Composition d'encre pour impression par jet d'encre, qui comprend une dispersion pigmentaire conforme à l'une des revendications 1 à 10, ainsi que, le cas échéant, un additif.

13. Composition d'encre pour impression par jet d'encre, conforme à la revendication 12, dans laquelle le contenu pigmentaire se trouve, dans cette composition d'encre, en une proportion pondérale de 1 à 8 %.

14. Procédé de formation d'image, qui comporte :
- le fait de prendre une composition d'encre pour impression par jet d'encre, conforme à la revendication 12 ou 13,
- et le fait de projeter cette composition d'encre, par une buse, pour former une image sur un substrat récepteur.
